# EUROPEAN PATENT SPECIFICATION

(11) **EP 1 211 365 B1**
(45) Date of publication and mention of the grant of the patent: **03.08.2005**
(21) Application number: 02250653.9
(22) Date of filing: 31.12.1996
(51) Int. Cl.: E04F 15/10, E04F 13/18

(54) **Decking system**
Fussbodensystem
Système de plancher

(30) Priority: 22.01.1996 US 589728
(43) Date of publication of application: 05.06.2002
(62) Divisional of application: 96309576.5
(73) Proprietor: L.B. Plastics Limited, Belper, Derbyshire DE56 2JJ (GB)
(72) Inventor: Davis, Harry H., Mooresville, North Carolina 28115 (US)
(74) Representative: Sales, Robert Reginald

(56) References cited:
- DE-A- 2 101 782
- DE-U- 1 966 366
- DE-U- 1 982 048
- DE-U- 7 042 144

## Description

This invention relates to a decking system, and also a decking or other structure comprising such a decking system. The invention is applicable, for example, in the construction of boat docks, piers, decks, patios, walkways, pontoon boat floors, and the like.

DE-A-2101782 discloses an assembly with a plurality of planks in edge-to-edge relation to form a decking assembly. First and second female connecting members are provided at opposite longitudinal side edges of the planks. Male connecting members are removably connected to the outer edge of one of said female connecting members and are adapted for connection to a female connecting member of an adjacent plank. Removal of the male connecting members exposes the second of the female connecting members for cooperation with the complimentary fastening member operable to secure and end plank of the assembled decking to an underlying supporting structure. With this arrangement it is necessary to remove the male connecting member to secure the arrangement to an underlying supporting structure. This arrangement also does not provide an aesthetically pleasing edge arrangement.

It is an object of the invention to provide a modular, one-piece plastic construction element which may be readily assembled together with a number of like planks to form a decking or other structure.

According to the invention there is provided a decking system comprising a plurality of planks for assembly in edge-to-edge relation to form a decking assembly, each plank comprising opposite first and second longitudinal side walls, spaced top and bottom walls interconnected by said opposite side walls to define a void therein, a male connecting member projecting outwardly beyond said first longitudinal side wall, a first female connecting member complementary to said male connecting member being formed at said second longitudinal side wall of the plank whereby two or more such planks may be connected together in side by side relation, said male connecting member and said first female connecting member being adapted to permit limited sliding movement of adjacent planks relative to one another in a direction transverse to the lengths of the planks and limited angular movement about an axis extending parallel to the lengths thereof, whereby to permit the top walls of adjacent planks to be angularly inclined relative to one another to accommodate irregularities in a base or other supporting structure on or by which the resultant decking or other structure is supported in use, characterised in that
- said male connecting member comprises a laterally projecting flange including a fastening portion for receiving fasteners therethrough for attaching the plank to said supporting structure, and a connecting portion extending in a plane parallel to but offset from the plane of said fastening portion,
- said first female connecting member consists of a channel extending adjacent said bottom wall at said second longitudinal side wall for receiving the connecting portion of the flange of an adjacent plank,
- each plank further comprises a second female connecting member provided at said first longitudinal side wall, said second female connecting member consisting of a further channel formed adjacent said male connecting member, a groove being formed along the length of the fastening portion of said flange at the connection of said male connecting member to the outer edge of said further channel to enable removal of the flange from the plank positioned at an exposed edge of the assembled structure in use, removal of said male connecting member exposing said further channel for receiving a trim member adapted to cloak the exposed edge of the end plank and to secure an end plank to an underlying supporting structure.

Locking means are preferably provided for locking the connecting portion of said flange on one plank with the channel of an adjacent plank. The locking means preferably comprises shoulders formed respectively on the connecting portion of said flange and within said channel.

A longitudinally extending groove is preferably formed in the fastening portion of said flange for guiding said fasteners therethrough to secure the plank to said supporting structure.

A plurality of spaced apart holes are preferably formed in said fastening portion of said flange for accommodating passage of fasteners therethrough to said supporting structure.

The invention also provides a decking or other structure comprising a decking system according to any of the preceding four paragraphs.
An embodiment of the invention will now be described, by way of example only, with reference to the accompanying drawings, in which:-
Figure 1 is a fragmentary perspective view of a decking structure comprising an assembly of decking planks according to one embodiment of the invention;
Figure 2 is a fragmentary perspective view of a number of decking planks mounted on joists of a supporting subfloor, showing the connecting means for locking adjacent planks together;
Figure 3 is an end view of one of the decking planks shown in Figure 2;
Figure 4 is an enlarged view of the circled area 'A' in Figure 3 showing a portion of the slip-resistant top surface of the decking plank;
Figure 5 is an enlarged view of the circled area 'B' in Figure 3 showing an integrally-formed flange of the decking plank;
Figure 6 is an enlarged view of the circled area 'C' in Figure 3 showing an integrally-formed complementary channel of the decking plank;
Figure 7 is an enlarged view of the circled area 'D' in Figure 3 showing an integrally-formed trim channel of the decking plank;
Figure 8 is an end view of an elongate fastener strip used for initiating decking construction;
Figure 9 is an end view of an elongate decking trim section for attachment to a longitudinal side of the decking plank;
Figure 10 is an end view of an elongate cap member for attachment to exposed ends of the decking planks;
Figure 11 is a perspective view of an alternative end cap for attachment to a distal end of a single decking plank;
Figure 12 is an end view of an elongate T-section for positioning adjacent to abutting ends of the decking planks;
Figure 13 is a cross-sectional view of two adjacent decking planks attached together;
Figure 14 is an enlarged fragmentary perspective view showing a decking trim according to Figure 9 positioned for attachment to a decking plank adjacent an exposed side edge of the decking structure;
Figure 15 is an enlarged fragmentary perspective view showing a flange according to Figure 8 used for beginning decking construction, and a cap member according to Figure 10 positioned for attachment to a decking plank; and
Figure 16 is an enlarged fragmentary view showing a modified form of connecting means.

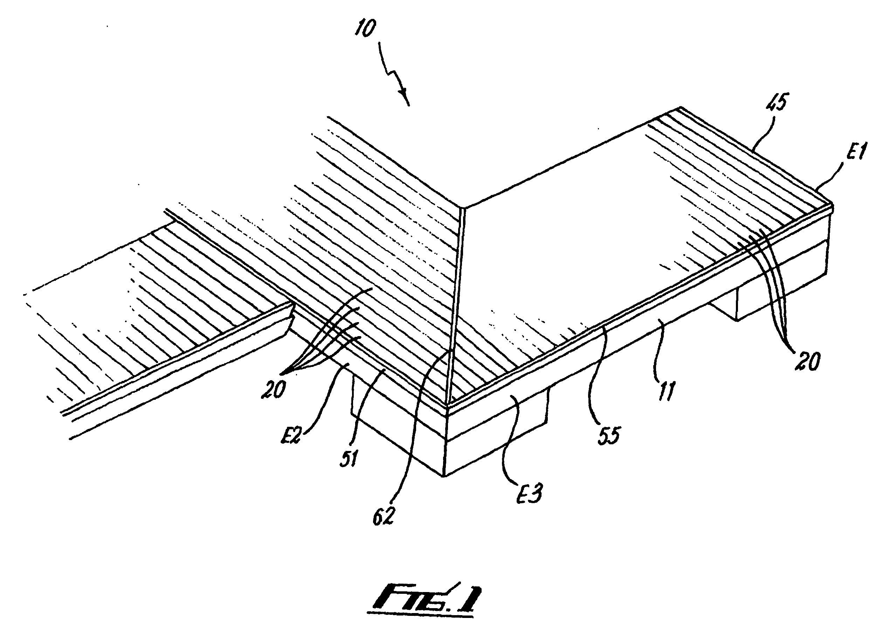

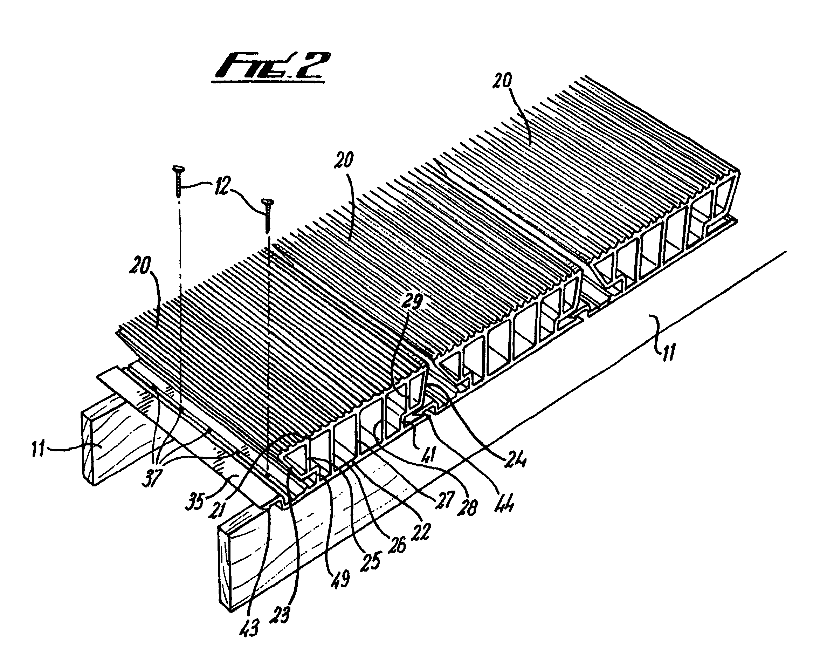

Referring to the drawings, a decking structure according to the present invention is illustrated in Figure 1 and shown generally at 10. The decking structure 10 is constructed of an assembly of one-piece modular construction elements in the form of decking planks 20 mounted on supporting joists 11 of a subfloor using wood screws 12, as shown in Figure 2, or other suitable fasteners (not shown). The decking planks 20 are formed of an extruded high impact, UV stabilized polymeric material, such as PVC plastic, and are easily cut with a hand saw or electric circular saw to any desired length. According to the embodiment disclosed, the width of the decking plank 20 is 5.750 inches (14.6 cm), and the height is 1.625 inches (4.13 cm). The maximum space between adjacent planks is approximately 0.25 inches (0.64 cm). Numerous other dimensions are possible within the scope of the invention. Moreover, while a boat dock is illustrated in Figure 1, the invention has further application in construction of patio decks, piers, walkways, balconies, and the like.

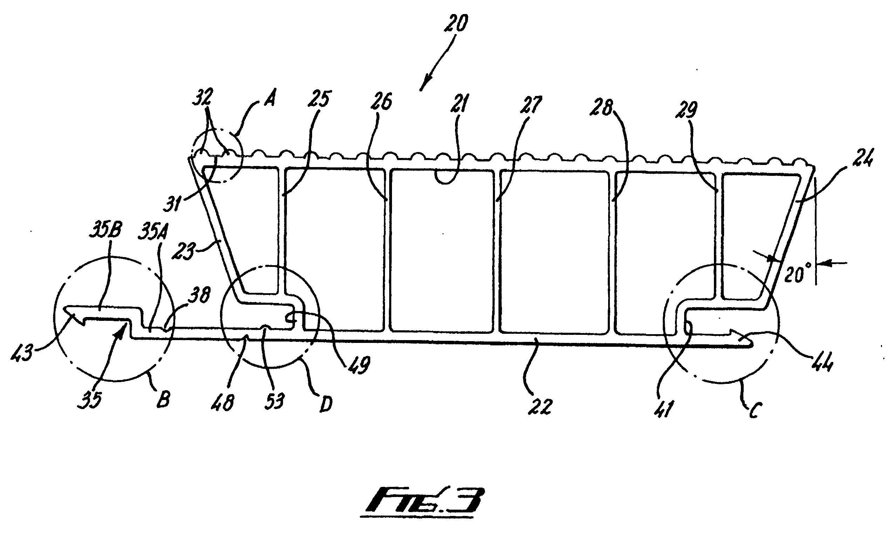

Referring to Figures 2 and 3, the decking plank 20 includes integrally-formed top and bottom walls 21 and 22, and opposing side walls 23 and 24. Integral reinforcing ribs 25, 26, 27, 28, and 29 are located between the side walls 23 and 24, and bridge the top and bottom walls 21 and 22. The ribs 25-29 extend longitudinally from one end of the decking plank 20 to the opposite end for increasing its load-resisting capacity. The side walls 23 and 24 converge towards the bottom wall 22 at an angle of about 20°.

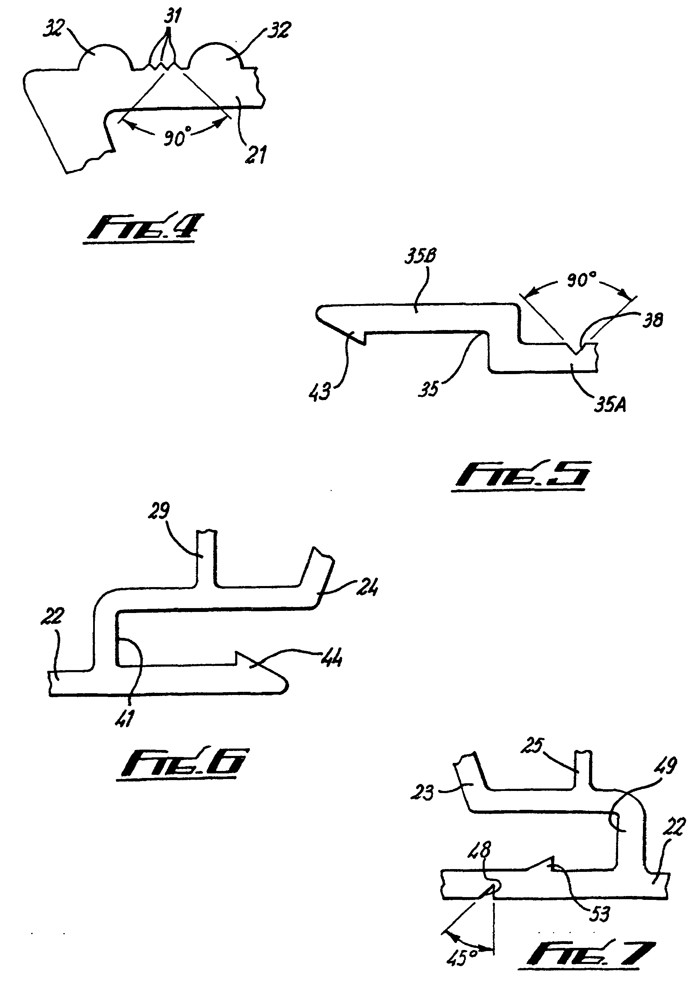

A portion of the top wall 21 is illustrated in detail in Figure 4. The top surface includes a number of alternately-spaced serrations 31 and risers 32 extending along the entire length of the decking plank 20, and laterally from one side edge of decking plank 20 to the other. In the illustrated embodiment, the serrations 31 extend 0.015 inches (0.038 cm) above the top surface of the decking plank 20, and are spaced approximately 0.030 inches (0.076 cm) apart from each other. The risers 32 extend 0.062 inches (0.16 cm) above the top surface, and are spaced approximately 0.25 inches (0.66 cm) apart. The rough texture provided by the serrations 31 and risers 32 creates a relatively slip-resistant decking surface.

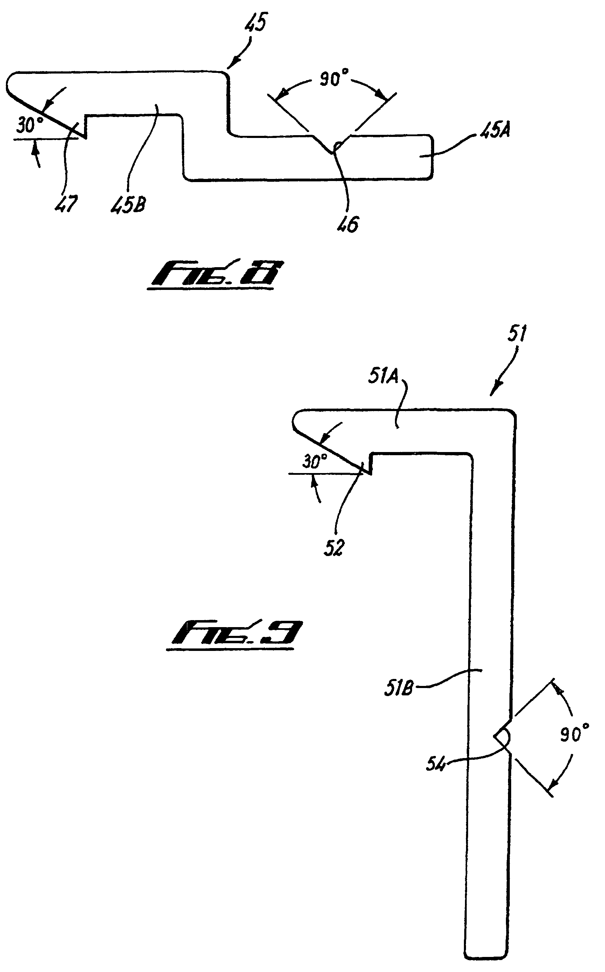

As shown in Figures 2, 3, and 5, an integrally-formed flange 35 extends outwardly from and along the bottom wall 22 on one side of the decking plank 20 along its entire length. The flange 35 includes a fastening portion 35A having a number of spaced openings 37 for receiving the wood screws 12 therethrough to the supporting joists 11, and for water drainage from a top surface of the decking structure 10. According to a preferred embodiment, the openings 37 are spaced 4.0 inches (10.16 cm) apart along the length of the flange 35 so that the planks 20 can be mounted to standard 16 inch (40.64 cm) centre joists. The unused openings 37 between the joists 12 are thus available for drainage.

In a modification the preformed openings 37 may be omitted, a small longitudinally extending groove 38 being formed in the flange 35 to help guide the screws 12 through the flange 35 and into the joists 11 of the subfloor. Enhanced water drainage may be achieved by sloping the decking plank 20 slightly from one end to the other. This embodiment of the invention without openings 37 is especially applicable for use in overhead decking whereby an area below the decking is sheltered from rain water runoff.

A connecting portion 35B of the flange 35 is integrally formed with the fastening portion 35A, and provided for attaching the decking plank 20 to an adjacent like plank. The connecting portion 35B extends outwardly in a plane above the fastening portion 35A and engages with a fastening channel 41 of the adjacent plank 20, as is best shown in Figure 13.

The channel 41 is integrally formed along the bottom wall 22 on the side of the decking plank 20 opposite the flange 35. The channel 41 extends longitudinally along the entire length of the decking plank 20, and cooperates with the connecting portion 35B of the flange 35 to space the adjacent planks 20 from each other and to attach the adjacent planks 20 together. The connecting portion 35B and channel 41 include interfering shoulders 43 and 44 providing a snap-attachment to lock the adjacent decking planks 20 to each other while permitting a limited degree of relative lateral movement between them.

The top walls of the adjacent planks may thus abut one another or be spaced apart to a limited variable extent. Spacing of the top walls creates series of longitudinal slots in the upper surface of the decking structure, through which surface water may drain into the generally triangular recesses defined by the sloping side walls 23 and 24 of the adjacent planks and the connecting members 35. These recesses may also serve to accommodate electrical or other cables to supply services at spaced locations along the assembled structure. Moreover by virtue of the relatively loose engagement between the connecting members 35 and 41, a limited degree of angular movement is permitted between adjacent planks to accommodate irregularities in level of the supporting joists 11.

A second channel or recess 49 is formed in the side wall 23 adjacent to the bottom wall 22 for receiving a flange portion 51A of decking trim 51 shown in Figures 1, 9, and 14. The decking trim 51 is used to finish an exposed side edge of the decking structure 10, as described further below.

To construct the decking, an elongate fastener strip 45, shown in Figures 1, 8, and 15, is first mounted on the supporting joists 11 at a side edge "E1" of the decking structure. A longitudinally extending groove 46 is formed in a mounting portion 45A of the strip 45 for guiding wood screws 12 or other fasteners therethrough to the joists 11. A first decking plank 20 is placed on the joists 11, and its fastening channel 41 snap-attached to a locking portion 45B of the fastener strip 45. A locking shoulder 47 is formed with the portion 45B, and cooperates with the shoulder 44 of the channel 41 to lock the decking plank 20 and fastener strip 45 together while permitting a limited degree of relative lateral movement between them. Successive planks 20 are then snap- attached together by inserting the connecting portion of the flange 35 of one plank 20 into the channel 41 of an adjacent plank, as shown in Figure 13. The planks 20 are secured one-by-one to the joists 11 by screws 12 as described above. The complementary connecting portions 35B and channels 41 of respective, adjacent planks 20 cooperate to space the planks 20 a predetermined distance from each other within the range of lateral adjustment permitted by the construction of these components. Separate spacers (not shown) may be used to achieve exact parallel spacing between adjacent planks.

Referring to Figures 1, 3, and 9, upon reaching a second side edge "E2" of the proposed decking structure, the flange 35 of the last fitted decking plank 20 is removed using a saw at a groove 48 formed at the junction of the bottom wall 22 and the flange 35. The groove 48 preferably extends along the entire length of the decking plank 20 and forms a parting line, as described above. After removing the flange 35, a locking portion 51A of a decking trim 51 is inserted into the trim channel 49 at the side edge "E2" of the decking structure 10. As best shown in Figure 14, the portion 51A and the channel 49 include interfering shoulders 52 and 53 for providing a convenient snap-attachment to lock the trim 51 and decking plank 20 together. A groove 54 is formed in the web 51B of the decking trim 51 for receiving screws 12 to secure the trim 51 directly to the adjacent supporting joist 11. If desired the joists 11 may be covered with an elongate plastic or vinyl cladding (not shown).

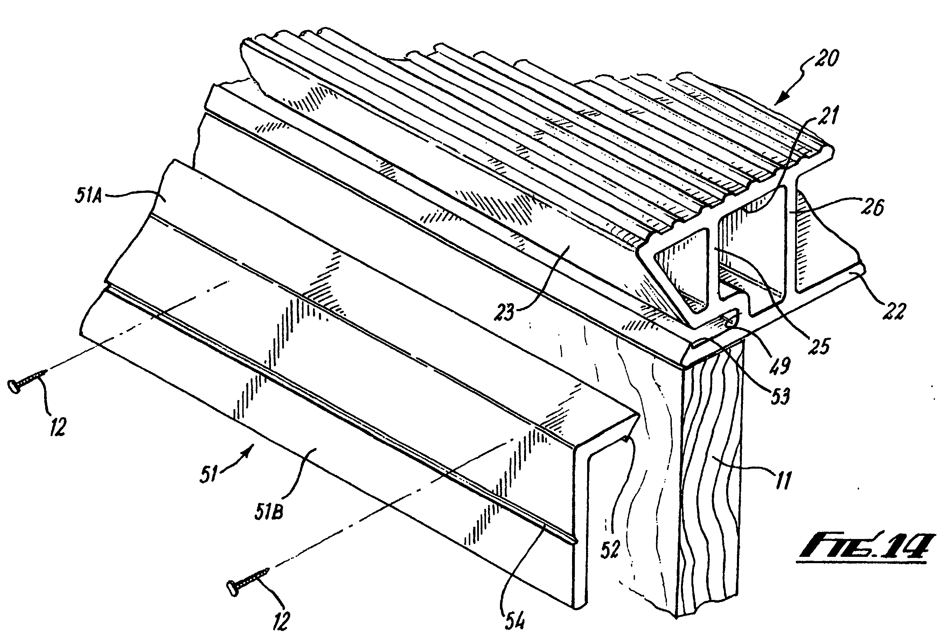

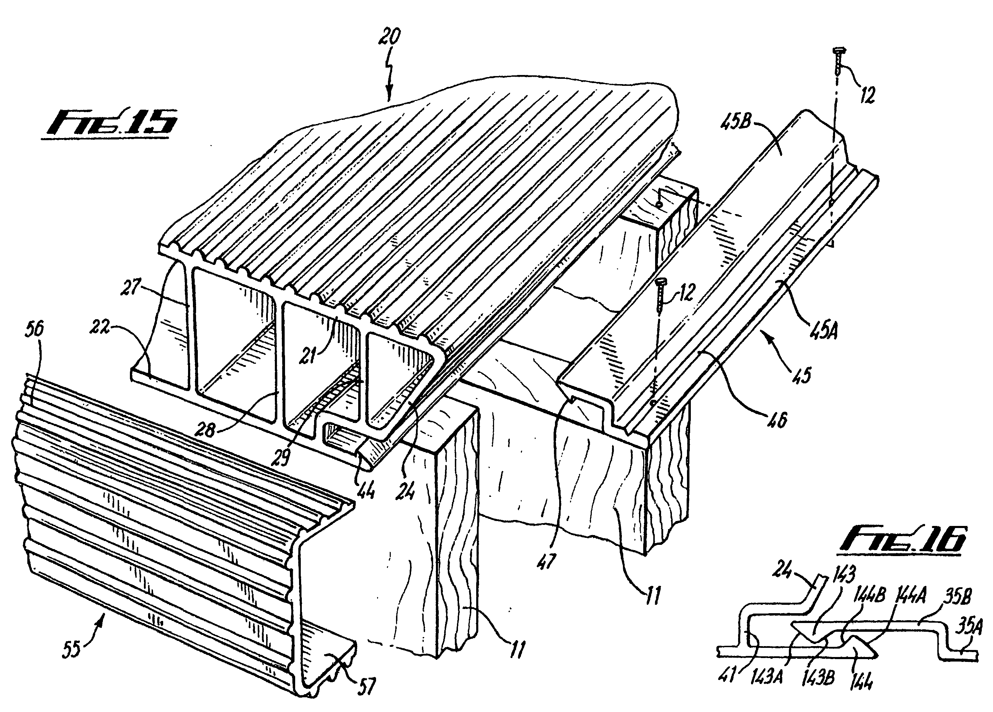

Referring to Figures 1, 10, and 15, at an adjacent side edge "E3" of the decking structure 10, an elongate C-shaped cap 55 shown in Figures 10 and 15 may be applied to the exposed ends of the decking planks 20 to provide a more attractive and aesthetic side finish. The cap 55 includes spaced apart resilient arms 56 and 57 which slightly converge so that when they are spread and forced onto the exposed ends of planks 20, they frictionally engage the planks 20. One or more caps 55 may be used to finish the exposed side edge "E3". Alternatively, each plank 20 can be fitted with an end cover 61 such as shown in Figure 11.

In addition, as shown in Figures 1 and 12, an elongate cover trim 62 of T-section may be positioned at mitered, abutting ends of decking planks 20 to provide a uniform and aesthetic transition between the planks 20. The T-section trim 62 includes a textured top surface with alternately spaced serrations 63 and risers 64, and a centre web 65 for locating between the abutting planks 20. The T-section trim 62 and end cap 55 may be further secured to the decking planks 20 with an adhesive or other suitable fastener if desired.

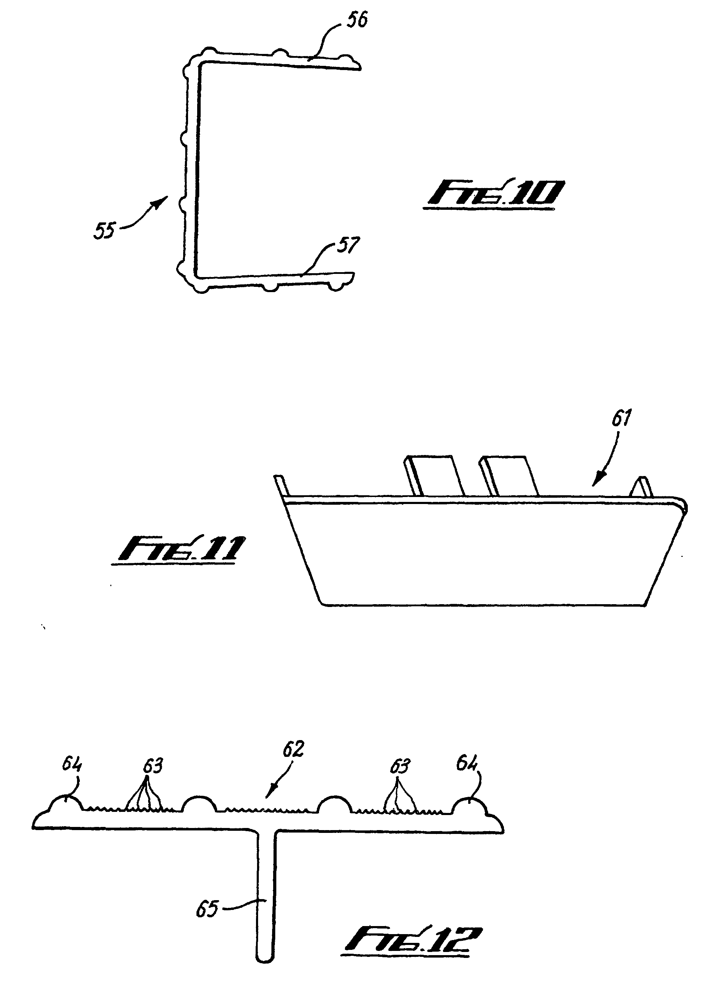

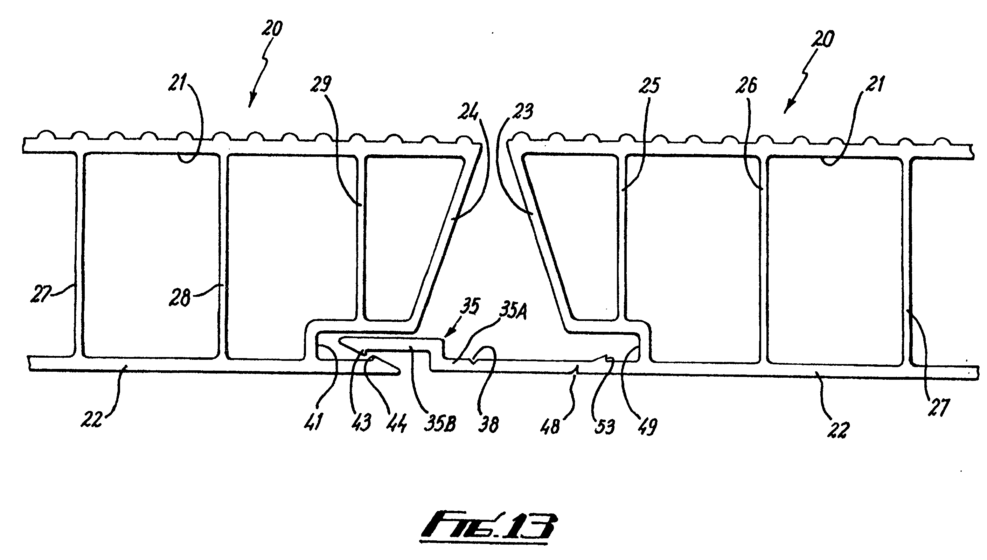

Figure 16 shows a modified form of connecting means similar to that shown in Figure 13 but in which the shoulders 43 and 44 have opposing sloping faces 43A, 43B and 44A, 44B. The sloping faces 43B and 44B replace the vertical abutting faces of the shoulders of Figure 13 and facilitate disengagement of the connecting means and separation of adjacent planks if required. The cooperating shoulders on the trim components of Figures 8 and 9 and the shoulder 53 may also be modified in a similar manner.

The decking structure described has numerous advantages over previously proposed wooden or plastic decking structures. There are no exposed nails or other fasteners at the surface of the decking structure which require replacement, or could cause injury. The embossed top surface provides enhanced slip-resistance and the integral construction of the individual planks avoids the need to engage interfitting components to form each plank. The manner of interconnection of the planks permits limited lateral adjustment between adjacent planks to accommodate to different overall widths of substructure and provides multiple drainage slots to clear water rapidly from the assembled structure.

It should be appreciated that while the invention is primarily intended for use in the construction of marine walkways and decking, plank elements according to the invention may also be used to construct cladding, screen fencing or other forms of structure.

## Claims

1. A decking system comprising a plurality of planks (20) for assembly in edge-to-edge relation to form a decking assembly, each plank (20) comprising opposite first and second longitudinal side walls (23, 24), spaced top and bottom walls (21, 22) interconnected by said opposite side walls (23, 24) to define a void therein, a male connecting member (35) projecting outwardly beyond said first longitudinal side wall (23), a first female connecting member (41) complementary to said male connecting member (35)being formed at said second longitudinal side wall (24) of the plank whereby two or more such planks may be connected together in side by side relation, said male connecting member (35) and said first female connecting member (41) being adapted to permit limited sliding movement of adjacent planks (20) relative to one another in a direction transverse to the lengths of the planks (20) and limited angular movement about an axis extending parallel to the lengths thereof, whereby to permit the top walls of adjacent planks (20) to be angularly inclined relative to one another to accommodate irregularities in a base or other supporting structure on or by which the resultant decking or other structure is supported in use, **characterised in that**
- said male connecting member (35) comprises a laterally projecting flange (35) including a fastening portion (35A) for receiving fasteners (12) therethrough for attaching the plank (20) to said supporting structure (11), and a connecting portion (35B) extending in a plane parallel to but offset from the plane of said fastening portion (35A),
- said first female connecting member (41) consists of a channel (41) extending adjacent said bottom wall (22) at said second longitudinal side wall (24) for receiving the connecting portion (35B) of the flange (35) of an adjacent plank (20),
- each plank (20) further comprises a second female connecting member (49) provided at said first longitudinal side wall (23), said second female connecting member (49) consisting of a further channel (49) formed adjacent said male connecting member (35), a groove (48) being formed along the length of the fastening portion (35A) of said flange at the connection of said male connecting member (35) to the outer edge of said further channel (49) to enable removal of the flange from the plank (20) positioned at an exposed edge of the assembled structure in use, removal of said male connecting member (35) exposing said further channel (49) for receiving a trim member (51) adapted to cloak the exposed edge of the end plank and to secure an end plank (20) to an underlying supporting structure (11).

2. A decking system according to claim 1, **characterised by** locking means (43, 44) for locking the connecting portion (35B) of said flange on one plank (20) with the channel (41) of an adjacent plank).

3. A decking system according to claim 2, **characterised in that** said locking means comprises shoulders (43, 44) formed respectively on the connecting portion (35B) of said flange and within said channel (41).

4. A decking system according to any of claims 1 to 3, **characterised by** a longitudinally extending groove (38) formed in the fastening portion (35A) of said flange for guiding said fasteners (12) therethrough to secure the plank (20) to said supporting structure (11).

5. A decking system according to any of claims 1 to 4, **characterised by** a plurality of spaced apart holes (37) formed in said fastening portion (35A) of said flange for accommodating passage of fasteners (12) therethrough to said supporting structure (11).

6. A decking or other structure **characterised in that** it comprises a decking system according to any of the preceding claims with the planks (20) assembled together on a supporting structure (11).

## Patentansprüche

1. Abdeckungssystem, umfassend eine Mehrzahl von Planken (20) zum Zusammenbau in Kante-zu-Kante-Beziehung, um eine Abdeckungseinheit zu bilden, wobei jede Flanke (20) umfasst: gegenüberliegende erste und zweite Längsseitenwände (23, 24), beabstandete Deck- und Bodenwände (21, 22), welche durch die gegenüberliegenden Seitenwände (23, 24) miteinander verbunden sind, um einen Hohlraum darin zu definieren, ein Steckverbindungselement (35), welches über die erste Längsseitenwand (23) hinaus nach außen vorsteht, und ein erstes aufnehmendes Verbindungselement (41), das komplementär zum Steckverbindungselement (35) ist und an der zweiten Längsseitenwand (24) der Planke ausgebildet ist, wodurch zwei oder mehr solcher Planken in einer Seite-an-Seite-Beziehung miteinander verbunden werden können, wobei das Steckverbindungselement (35) und das erste aufnehmende Verbindungselement (41) so ausgelegt sind, dass sie eine begrenzte Gleitbewegung von benachbarten Planken (20) in Bezug aufeinander in einer Richtung quer zu den Längen der Planken (20) und eine begrenzte Winkelbewegung um eine Achse, welche sich parallel zu den Längen davon erstreckt, erlauben, um dadurch zu erlauben, dass die Deckwände von benachbarten Planken (20) in Bezug aufeinander winkelig geneigt sind, um Unregelmäßigkeiten in einer Basis- oder anderen tragenden Struktur, auf welcher oder durch welche die resultierende Abdeckungs- oder andere Struktur bei Verwendung getragen wird, auszugleichen, **dadurch gekennzeichnet, dass**
- das steckverbindungselement (35) einen seitlich vorstehenden Flansch (35) umfasst, der einen Befestigungsabschnitt (35A) zur Aufnahme von Befestigungselementen (12) dadurch zum Befestigen der Planke (20) an der tragenden Struktur (11) und einen Verbindungsabschnitt (35B), welcher sich in einer Ebene parallel zu, aber versetzt von der Ebene des Befestigungsabschnitts (35A) erstreckt, aufweist;
- das erste aufnehmende Verbindungselement (41) aus einem Kanal (41) besteht, der sich benachbart zur Bodenwand (22) an der zweiten Längsseitenwand (24) zur Aufnahme des Verbindungsabschnitts (35B) des Flansches (35) einer benachbarten Planke (20) erstreckt,
- jede Planke (20) ferner ein zweites aufnehmendes Verbindungselement (49) aufweist, das an der ersten Längsseitenwand (23) vorgesehen ist, wobei das zweite aufnehmende Verbindungselement (49) aus einem weiteren Kanal (49) besteht, der benachbart zum Steckverbindungselement (35) ausgebildet ist, wobei eine Nut (48) entlang der Länge des Befestigungsabschnitts (35A) des Flansches an der Verbindung des Steckverbindungselements (35) mit der Außenkante des weiteren Kanals (49) aus gebildet ist, um die Entfernung des Flansches von der Planke (20) zu ermöglichen, die bei Verwendung an einer freien Kante der zusammengebauten Struktur positioniert ist, wobei die Entfernung des Steckverbindungselements (35) den weiteren Kanal (49) zur Aufnahme eines Deckleistenelements (51) frei legt, das so ausgelegt ist, dass es die freie Kante der Endplanke verhüllt und eine Endplanke (20) an einer darunter liegenden Struktur (11) befestigt.

2. Abdeckungssystem nach Anspruch 1, **gekennzeichnet durch** Verriegelungsmittel (43, 44) zum Verriegeln des verbindungsabschnitts (35B) des Flansches auf einer Planke (20) mit dem Kanal (41) einer benachbarten Planke.

3. Abdeckungssystem nach Anspruch 2, **dadurch gekennzeichnet, dass** das Verriegelungsmittel Schultern (43, 44) aufweist, welche jeweils auf dem Verbindungsabschnitt (35B) des Flansches und innerhalb des Kanals (41) ausgebildet sind.

4. Abdeckungssystem nach einem der Ansprüche 1 bis 3, **gekennzeichnet durch** eine sich der Länge nach erstreckenden Nut (38), welche im Befestigungsabschnitt (35A) des Flansches zum Führen der Befestigungselemente (12) **dadurch** ausgebildet sind, um die Planke (20) an der tragenden Struktur (11) zu befestigen.

5. Abdeckungssystem nach einem der Ansprüche 1 bis 4, **gekennzeichnet durch** eine Mehrzahl von voneinander beabstandeten Löchern (37), welche im Befestigungsabschnitt (345A) des Flansches zur Aufnahme eines Durchgangs von Befestigungselementen (12) **dadurch** zur tragenden Struktur (11) ausgebildet sind.

6. Abdeckungs- oder andere Struktur, **dadurch gekennzeichnet, dass** sie ein Abdeckungssystem gemäß einem der vorhergehenden Ansprüche mit den Planken (20), die auf einer tragenden Struktur (11) zusammengebaut sind, umfasst.

## Revendications

1. Système de platelage comportant une pluralité de planches (20) destinées à être assemblées dans une relation bord à bord pour former un ensemble formant platelage, chaque planche (20) comportant des première et seconde parois latérales longitudinales opposées (23, 24), des parois supérieure et inférieure espacées (21, 22) connectées mutuellement par lesdites parois latérales opposées (23, 24) afin de définir un vide dans celui-ci, un élément de connexion mâle (35) faisant saillie vers l'extérieur au-delà de ladite paroi latérale longitudinale (23), un premier élément de connexion femelle (41) complémentaire audit élément de connexion mâle (35) étant formé au niveau de ladite seconde paroi latérale longitudinale (24) de la planche, de sorte que deux ou plus de deux telles planches peuvent être connectées ensemble dans une relation côte à côte, ledit élément de connexion mâle (35) et ledit premier élément de connexion femelle (41) étant adaptés pour permettre un déplacement coulissant limité de planches adjacentes (20) l'une par rapport à l'autre dans une direction transversale aux longueurs des planches (20), et un déplacement angulaire limité autour d'un axe s'étendant parallèlement aux longueurs de celles-ci, de manière à permettre aux parois supérieures de planches adjacentes (20) d'être inclinées de manière angulaire l'une par rapport à l'autre pour s'adapter à des irrégularités dans une base ou une autre structure de support, sur laquelle ou par l'intermédiaire de laquelle le platelage résultant ou l'autre structure est supporté(e) en utilisation, **caractérisé en ce que**
- ledit élément de connexion mâle (35) comporte un rebord faisant saillie latéralement (35), comportant une partie de fixation (35A) pour recevoir des fixations (12) à travers celle-ci afin de fixer la planche (20) sur ladite structure de support (11), et une partie de connexion (35B) s'étendant dans un plan parallèle au plan de ladite partie de fixation (35A), mais décalé par rapport à celui-ci,
- ledit élément de connexion femelle (41) consiste en un canal (41) s'étendant adjacent à ladite paroi inférieure (22) au niveau de ladite seconde paroi latérale longitudinale (24) pour recevoir la partie de connexion (35B) du rebord (35) d'une planche adjacente (20),
- chaque planche (20) comporte de plus un second élément de connexion femelle (49) agencé au niveau de ladite première paroi latérale longitudinale (23), ledit second élément de connexion femelle (49) consistant en un canal supplémentaire (49) formé adjacent audit élément de connexion mâle (35), une gorge (48) étant formée le long de la longueur de la partie de fixation (35A) dudit rebord au niveau de la connexion dudit élément de connexion mâle (35) au bord extérieur dudit canal supplémentaire (49) pour permettre un enlèvement du rebord à partir de la planche (20) positionnée au niveau d'un bord exposé de la structure assemblée en utilisation, l'enlèvement dudit élément de connexion mâle (35) exposant ledit canal supplémentaire (49) pour recevoir un élèment formant bordure (51) adapté pour masquer le bord exposé de la planche d'extrémité, et pour fixer une planche d'extrémité (20) sur une structure de support sous-jacente (11).

2. Système de platelage selon la revendication 1, **caractérisé par** des moyens de verrouillage (43, 44) destinés à verrouiller la partie de connexion (35B) dudit rebord sur une première planche (20) avec le canal (41) d'une planche adjacente.

3. Système de platelage selon la revendication 2, **caractérisé en ce que** lesdits moyens de verrouillage comportent des épaulements (43, 44) formés respectivement sur la partie de connexion (35B) dudit rebord, et dans ledit canal (41).

4. Système de platelage selon l'une quelconque des revendications 1 à 3, **caractérisé par** une gorge s'étendant longitudinalement (38) formée dans la partie de fixation (35A) dudit rebord pour guider lesdites fixations (12) à travers celle-ci afin de fixer la planche (20) sur ladite structure de support (11).

5. Système de platelage selon l'une quelconque des revendications 1 à 4, **caractérisé par** une pluralité de trous espacés (37) formés dans ladite partie de fixation (35A) dudit rebord, pour accepter le passage de fixations (12) à travers ceux-ci, vers ladite structure de support (11).

6. Platelage ou autre structure, **caractérisé en ce qu'**il comporte un système de platelage selon l'une quelconque des revendications précédentes, les planches (20) étant assemblées ensemble sur une structure de support (11).
